Europäisches Patentamt

European Patent Office

Office européen des brevets

(19)

(11) Veröffentlichungsnummer : **0 197 197**
**B1**

## (12) EUROPÄISCHE PATENTSCHRIFT

(45) Veröffentlichungstag der Patentschrift :
**15.03.89**

(21) Anmeldenummer : **85115427.8**

(22) Anmeldetag : **05.12.85**

(51) Int. Cl.⁴ : **B 60 Q 11/00**, G 01 R 31/00/·
F02P19/02

(54) **Einrichtung zur Kontrolle von elektrischen Verbrauchern in Kraftfahrzeugen.**

(30) Priorität : **11.01.85 DE 3500676**

(43) Veröffentlichungstag der Anmeldung :
**15.10.86 Patentblatt 86/42**

(45) Bekanntmachung des Hinweises auf die Patenterteilung : **15.03.89 Patentblatt 89/11**

(84) Benannte Vertragsstaaten :
**DE FR IT NL SE**

(56) Entgegenhaltungen :
**DE—A— 2 934 071
DE—B— 1 147 802
DE—B— 1 206 512
DE—B— 1 933 016
PATENT ABSTRACTS OF JAPAN, Band 6, Nr. 29 (M-
113)[907], 20. Februar 1982; & JP - A - 56 146 071
(MATSUSHITA DENKI SANGYO) 13.11.1981
Die Akte enthält technische Angaben, die nach dem
Eingang der Anmeldung eingereicht wurden und die
nicht in dieser Patentschrift enthalten sind.**

(73) Patentinhaber : **ROBERT BOSCH GMBH
Postfach 50
D-7000 Stuttgart 1 (DE)**

(72) Erfinder : **Schirmer, Günter, Dipl.-Ing.
Kettenweg 13
D-7121 Ingersheim (DE)**
Erfinder : **Wölffing-Seelig, Gerhard
Hackländerstrasse 38
D-7000 Stuttgart 1 (DE)**

**EP 0 197 197 B1**

Jouve, 18, rue St-Denis, 75001 Paris, France

## Beschreibung

Die Erfindung geht aus von einer Einrichtung zur Kontrolle von elektrischen Verbrauchern in Kraftfahrzeugen nach der Gattung des Oberbegriffs des Hauptanspruchs.

Aus der deutschen Patentanmeldung DE-A-29 34 071.4 ist eine Einrichtung bekannt, bei der jede Zuleitung zu einem elektrischen Verbraucher durch einen elektromagnetischen Übertrager hindurchgeführt ist. Dadurch ist es möglich, zu überprüfen, ob ein Strom zu den einzelnen elektrischen Verbrauchern fließt oder nicht. Der Nachteil dieser bekannten Einrichtung besteht hauptsächlich darin, daß für jeden elektrischen Verbraucher ein elektromagnetischer Übertrager notwendig ist, was einen hohen Material- und damit auch Kostenaufwand mit sich bringt.

Des weiteren ist aus der JP-A-56 146 071 eine Einrichtung zur Kontrolle der Temperatur einer Glühkerze bekannt. Zwei Verbraucher sind durch Induktivitäten entkoppelt. Die Verbraucher werden über einen Schalter mit der Versorgungsspannung beaufschlagt. Eine Glühkerze wird mit einem Prüfsignal aus einem Generator 5 beaufschlagt. Bei Überschreiten eines vorgegebenen Widerstandes der Glühkerze wird die Versorgungsspannung unterbrochen und eine Kontrollampe angesteuert. Mittels dieser Einrichtung kann nur eine Glühkerze überwacht werden. Unserer Erfindung liegt dagegen die Aufgabe zugrunde, alle Verbraucher mit einer Überwachungseinrichtung und einer Prüfsignalquelle zu überwachen.

Die erfindungsgemäße Einrichtung zur Kontrolle von elektrischen Verbrauchern in Kraftfahrzeugen mit den Merkmalen des Hauptanspruchs hat demgegenüber dem beschriebenen Stand der Technik den Vorteil, daß durch diese eine einfache und billige Stromflußüberprüfung realisiert werden kann. Dies wird dadurch erreicht, daß die einander parallel geschalteten Serienschaltungen aus Glühkerzen und Induktivitäten mit Hilfe eines Generators mit einer Wechselspannung oder einzelnen Spannungsimpulsen zu beaufschlagen sind. Die Überprüfung des Stromflusses durch die einzelnen Glühkerzen kann dann ausgehend von den Verbindungspunkten zwischen den einzelnen Glühkerzen und Induktivitäten vorgenommen werden.

Besonders vorteilhaft ist es, die einander parallel geschalteten Serienschaltungen von jeweils einer Induktivität und einer Glühkerze mit Hilfe einer Kapazität zu einem Schwingkreis zu ergänzen.

Weitere vorteilhafte Weiterbildungen und Verbesserungen der im Hauptanspruch angegebenen erfindungsgemäßen Einrichtung sind durch die in den Unteransprüchen aufgeführten Maßnahmen möglich.

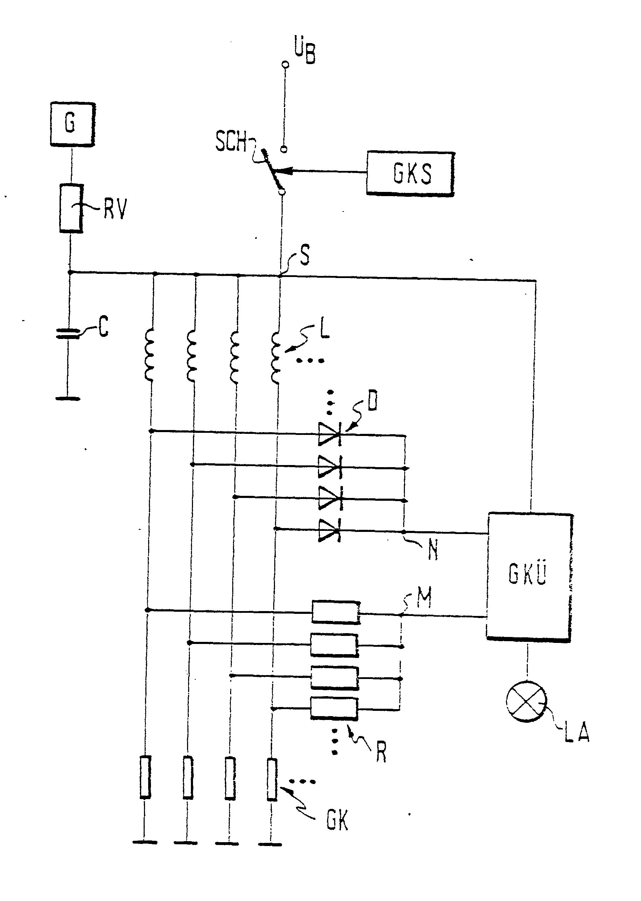

Ein Ausführungsbeispiel der Erfindung ist in der einzigen Figur der Zeichnung dargestellt.

Die erfindungsgemäße Einrichtung zur Kontrolle von elektrischen Verbrauchern in Kraftfahrzeugen kann im Grunde genommen im Zusammenhang mit sämtlichen Verbrauchern, die in einem Kraftfahrzeug eingesetzt sind, verwendet werden. Besonders vorteilhaft ist jedoch der Einsatz der genannten Einrichtung zur Kontrolle von Glühkerzen, die insbesondere bei Diesel-Brennkraftmaschinen vorhanden sind.

Die einzige Figur der Zeichnung zeigt ein Ausführungsbeispiel einer erfindungsgemäßen Glühkerzenüberwachung. Dabei sind mit GK die Glühkerzen der Brennkraftmaschine bezeichnet, deren Anzahl normalerweise der Zylinderanzahl der Brennkraftmaschine entspricht. Jeder Glühkerze ist nun jeweils eine Spule L, eine Diode D und ein Widerstand R zugeordnet, so daß insgesamt die Anzahl der Glühkerzen GK, der Spulen L, der Dioden D und der Widerstände R gleich sind. Jeweils eine Glühkerze GK und eine Spule L bilden eine Serienschaltung von einem Sammelpunkt S nach Masse. Der genannte Sammelpunkt S ist dann über einen Schalter SCH mit der Batteriespannung UB verbunden, wobei der Schalter SCH in Abhängigkeit von einer Glühkerzensteuerung GKS ein- und ausgeschaltet wird. Von jedem Verbindungspunkt einer Glühkerze GK und einer Induktivität L führt eine Verbindungsleitung über eine Diode D zu einem Punkt N bzw. über einen Widerstand R zu einem Punkt M. Die beiden zuletzt genannten Punkte N und M sind schließlich mit einer Glühkerzenüberwachung GKÜ verbunden, die des weiteren an dem Sammelpunkt S angeschlossen ist, und die in Abhängigkeit von den genannten Eingangssignalen beispielhaft eine Lampe LA ansteuert, mit deren Hilfe z. B. ein Glühkerzenausfall angezeigt werden kann. Zuletzt ist der Sammelpunkt S noch über eine Kapazität C auf Masse gelegt, sowie über einen Vorwiderstand RV mit einem Generator G verbunden. Der Vorwiderstand RV kann dabei auch als induktiver oder kapazitiver Widerstand ausgebildet sein.

Im geschlossenen Schaltzustand der Schalteinrichtung SCH fließt ein Strom von der Batteriespannung UB jeweils über eine Induktivität L und eine Glühkerze GK nach Masse. In diesem statischen Betriebszustand ist es nicht möglich, mit Hilfe der erfindungsgemäßen Einrichtung den Stromfluß durch die Glühkerzen zu überwachen, da für den durch die Glühkerzen fließenden Gleichstrom die Induktivitäten L keine entkoppelnde Wirkung haben, und damit die Verbindungspunkte der Induktivitäten L und der Glühkerzen GK, unabhängig davon ob eine Glühkerze intakt oder defekt ist, immer das Potential der Batteriespannung UB aufweisen.

Ist hingegen die Schalteinrichtung SCH geöffnet, so ist es möglich, mit Hilfe des Generators G die Funktionsfähigkeit der Glühkerzen GK zu kontrollieren. Zu diesem Zweck erzeugt der Generator G eine Wechselspannung oder einzelne Spannungsimpulse, in jedem Fall eine sich ändernde Spannung, die über den Vorwiderstand RV zum Sammelpunkt S gelangt. Aufgrund der sich ändernden Spannung des Generators G werden nun, im Gegensatz zum statischen Betriebsfall, die Induktivitäten L wirksam, und zwar werden die einzelnen Glühkerzen GK bei sich ändernder Generatorspannung G durch die Induktivitäten L untereinander dynamisch entkoppelt. Aufgrund dieser Entkoppelung ist es dann möglich, daß sich an den Verbindungspunkten der einzelnen Induktivitäten L und Glühkerzen GK Spannungen bilden können, die von der am Sammelpunkt S anliegenden Generatorspannung verschieden sind. Bei intakter Glühkerze GK liegt am Verbindungspunkt dieser Glühkerze GK und der zugehörigen Induktivität L eine relativ niedere Spannung an, da die Glühkerze GK auch nur einen kleinen Widerstand aufweist. Am Punkt M bildet sich eine Spannung aus, die einem Mittelwert der Spannungen der einzelnen Verbindungspunkte der jeweiligen Glühkerzen GK und Induktivitäten L entspricht. Gleichzeitig ergibt sich am Punkt N eine Spannung, die um die Durchlaßspannung einer Diode kleiner ist als die größte Spannung an einem der Verbindungspunkte. Bei intakten Glühkerzen GK ist deshalb die Spannung am Punkt N kleiner als die Spannung am Punkt M, was die Glühkerzenüberwachung GKÜ z. B. mit Hilfe eines Vergleichs der beiden Spannungen erkennen kann. Ist jedoch wenigstens eine der Glühkerzen GK defekt, so ergibt sich am Verbindungspunkt dieser Glühkerze mit der zugehörigen Induktivität L eine hohe Spannung, da ja jetzt die Glühkerze GK, elektrisch gesehen, einen unendlich großen Widerstand hat. Aufgrund der durch die defekte Glühkerze GK hervorgerufenen großen Spannung am Verbindungspunkt von Induktivität L und Glühkerze GK verändert sich nun die Spannung am Punkt M hin zu einem größeren Wert. Gleichzeitig steigt jedoch auch die Spannung am Punkt N und zwar auf einen Wert, der um die Durchlaßspannung einer Diode kleiner ist als das hohe Potential, das durch die defekte Glühkerze GK hervorgerufen worden ist. Der Vergleich der Spannungen an den Punkten N und M ergibt in diesem Betriebsfall, also wenn wenigstens eine der Glühkerzen GK defekt ist, am Punkt N eine größere Spannung als am Punkt M. Dies wird von der Glühkerzenüberwachung GKÜ erkannt und z. B. mit Hilfe der Lampe LA angezeigt.

Die im Ausführungsbeispiel dargestellte Kapazität C hat die Aufgabe, zusammen mit den einander parallel geschalteten Serienschaltungen der Induktivitäten L und der Glühkerzen GK einen Parallelschwingkreis zu bilden, und damit das sichere Erkennen defekter Glühkerzen GK durch die Glühkerzenüberwachung GKÜ zu gewährleisten. Es ist dabei gegebenenfalls nicht unbedingt notwendig, daß die Kapazität C als einzelnes Bauelement in die Schaltung aufgenommen wird, da aufgrund der Leitungskapazitäten insbesondere der Zuleitungen zu den Glühkerzen GK bei entsprechender Dimensionierung der übrigen Bauelemente, insbesondere der Induktivität L, schon ein Parallelschwingkreis besteht. Im Grunde genommen ist es sogar möglich, auf die Kapazität C gänzlich zu verzichten, da für das prinzipielle Funktionieren der gesamten Überwachungsschaltung hauptsächlich die Entkopplung der einzelnen Glühkerzen untereinander durch die Induktivitäten L ausschlaggebend ist. Ebenfalls ist es möglich, statt aufwendig gewickelter Induktivitäten L in einfacher Weise Ferritröhrchen aus geeignetem Ferritmaterial über die stromführenden Leitungen zu schieben, um dadurch die notwendigen Induktivitäten L zu erhalten. Insgesamt ist also in besonders vorteilhafter Weise der Aufbau des beschriebenen Ausführungsbeispieles dadurch zu vereinfachen, daß als Induktivitäten einfache, über die Zuleitungen zu den Glühkerzen GK geschobene Ferritröhrchen dienen, und daß als Kapazitäten die Leitungskapazitäten der besagten Zuleitungen ausgenutzt werden.

Die der Steuerung des Stromflusses durch die Glühkerzen GK dienende Schalteinrichtung SCH, die von der Glühkerzensteuerung GKS ein- und ausgeschaltet wird, kann z. B. mittels eines Relais realisiert sein. Es ist jedoch auch möglich, als Schalteinrichtung SCH elektronische Schalter, insbesondere Transistoren zu verwenden. Durch diese Maßnahme kann dann die Schaltfrequenz der Schalteinrichtung SCH wesentlich erhöht werden. Aus diesem Grund ist es bei einer Realisierung der Schalteinrichtung SCH mit einem entsprechend schnell schaltenden elektronischen Schalter in besonders vorteilhafter Weise möglich, auf den Generator G und den Vorwiderstand RV zu verzichten und die zur Glühkerzenüberwachung notwendige, sich ändernde Spannung, z. B. einzelne Spannungsimpulse, direkt mit Hilfe der Glühkerzensteuerung GKS und der Schalteinrichtung SCH zu erzeugen.

Im beschriebenen Ausführungsbeispiel sind die den einzelnen Glühkerzen zugeordneten Dioden D am Punkt N zusammengeführt und einer einzigen Glühkerzenüberwachung GKÜ zugeleitet. Es ist nun auch in besonders vorteilhafter Weise möglich, die jeweils einer Glühkerze GK zugehörige Diode D direkt einer zu der besagten Glühkerze GK gehörenden Glühkerzenüberwachung GKÜ zuzuführen. Dies hätte dann zur Folge, daß insgesamt soviele Glühkerzenüberwachungen vorhanden sind, wie Glühkerzen in der Brennkraftmaschine eingebaut sind. Der Vorteil dieser Anordnung liegt darin, daß nicht nur erkannt werden kann, daß eine der Glühkerzen defekt ist, sondern daß gezielt auch erkannt werden kann, welche der Glühkerzendefekt ist.

Die Widerstände R mit ihrem gemeinsamen Punkt M können auch entfallen, dann wird die Spannung am Punkt N mit einer von der Spannung am Punkt S, z. B. durch Spannungsteilung, abgeleiteten Spannung verglichen. Dabei können die Dioden D auch umgekehrt gepolt sein.

Im beschriebenen Ausführungsbeispiel ist die Glühkerzenüberwachung GKÜ auch mit dem Sammelpunkt S verbunden, und wird daher auch von der Ausgangsspannung des Generators G beaufschlagt. Dies kann in besonders vorteilhafter Weise dazu verwendet werden, daß mit Hilfe dieser Generatorausgangsspannung die Überwachung, also der Vergleich der Spannungen an den Punkten N und M getriggert wird. So kann z. B. bei jedem Spannungsimpuls des Generators G die Spannungen an den Punkten N und M von der Glühkerze der Überwachung GKÜ miteinander verglichen und bis zum nächsten Spannungsimpuls des Generators G innerhalb der Glühkerzenüberwachung GKÜ zwischengespeichert werden. Dies ist jedoch nur eine Möglichkeit einer schaltungstechnischen Realisierung der Glühkerzenüberwachung GKÜ. Es sind aber auch andere Möglichkeiten der Ausführung der Glühkerzenüberwachung GKÜ denkbar, die gegebenenfalls auch ohne das Ausgangssignal des Generators G auskommen.

Auch die Glühkerzensteuerung GKS und der Generator G bieten verschiedene Möglichkeiten der Realisierung. Dabei ist es möglich, die Funktion der Glühkerzensteuerung GKS und/oder die Funktion des Generators G in Abhängigkeit von Betriebskenngrößen der Brennkraftmaschine aufzubauen. Auch ist es möglich, die im Ausführungsbeispiel beispielhaft dargestellte Lampe LA durch andere Anzeigeinstrumente zu ersetzen, oder auch weitergehend durch weitreichendere Funktionen zu erweitern.

## Patentansprüche

1. Einrichtung zur Kontrolle von elektrischen Verbrauchern in Kraftfahrzeugen mit wenigstens zwei elektrischen Verbrauchern (GK), einer Schalteinrichtung (SCH) zur Steuerung des Stromflusses durch die elektrischen Verbraucher, wobei die elektrischen Verbraucher mit Hilfe von jeweils in Serie geschalteten Induktivitäten (L) untereinander dynamisch entkoppelt sind und die Reihenschaltungen aus Verbraucher und Induktivität in einem gemeinsamen Punkt (S) verbunden sind, dadurch gekennzeichnet, daß ein Generator (G) eine sich ändernde Prüfspannung, insbesondere eine Wechselspannung liefert, die über diesen Punkt (S) den Verbrauchern (GK) zugeführt wird, und daß zur Kontrolle der elektrischen Verbraucher deren Potentiale erfaßt und ausgewertet werden.

2. Einrichtung nach Anspruch 1, dadurch gekennzeichnet, daß der jeweilige Verbindungspunkt der Induktivitäten (L) und der elektrischen Verbraucher (GK) über je eine Diode (D) mit einem ersten Punkt (N) und über je einen Widerstand (R) mit einem zweiten Punkt (M) verbunden wird, um dann durch eine Auswertung der Potentiale des ersten (N) und des zweiten Punktes (M) den Stromfluß durch den elektrischen Verbraucher (GK) zu kontrollieren.

3. Einrichtung nach wenigstens einem der Ansprüche 1 oder 2, dadurch gekennzeichnet, daß mit Hilfe einer parallel oder seriell zur Serienschaltung aus Induktivität (L) und elektrischem Verbraucher (GK) geschalteten Kapazität (C) ein Schwingkreis gebildet wird.

## Claims

1. Device for checking electric loads in motor vehicles having at least two electric loads (GK), a switching device (SCH) for controlling the current flow through the electric loads, the electric loads being dynamically decoupled with respect to one another with the aid of inductances (L) which are in each case connected in series, and the series circuits of load and inductance being connected at a common point (S), characterized in that a generator (G) supplies a changing test voltage, particularly an alternating voltage which is supplied to the loads (GK) via this point (S), and that, for the purpose of checking the electric loads, their potentials are detected and analyzed.

2. Device according to Claim 1, characterized in that the respective junction of the inductances (L) and the electric loads (GK) is connected via one diode (D) each to a first point (N) and via a resistor (R) each to a second point (M), so that the current flow through the electric load (GK) can then be checked by analyzing the potentials of the first (N) and of the second point (M).

3. Device according to at least one of Claims 1 or 2, characterized in that a resonant circuit is formed with the aid of a capacitance (C) which is connected in parallel or in series with the series circuit of inductance (L) and electric load (GK).

## Revendications

1. Dispositif de contrôle de consommateurs électriques dans des véhicules automobiles avec au moins deux consommateurs électriques (GK), un dispositif de commutation (SCH) pour la commande du flux de courant à travers un consommateur électrique, les consommateurs électriques étant, à cette occasion, découplés dynamiquement entre elles à l'aide d'inductances (L) chaque fois branchées en série et les circuits série se composant de consommateurs et d'inductance étant reliés en un point commun (S), caractérisé en ce qu'un générateur (G) fournit une tension de contrôle variable, en particulier une tension alternative, qui est amenée par ce point (S) au consommateur (GK), et en ce que les potentiels sont captés et exploités pour réaliser le contrôle des consommateurs électriques.

2. Dispositif selon la revendication 1, caractérisé en ce que chaque point de liaison des inductances (L) et des consommateurs électriques (GK) par l'intermédiaire chaque fois d'une diode (D) est relié à un premier point (N) et, chaque fois par une résistance (R), à un deuxième point (M), afin de contrôler par une exploitation du potentiel du premier (N) et du deuxième (M) point le flux de courant passant par le consommateur électrique (GK).

3. Dispositif selon au moins une des revendications 1 ou 2, caractérisé en ce qu'un circuit oscillant est formé à l'aide d'une capacité (C) branchée en parallèle ou en série par rapport au circuit série se composant de l'inductance (L) et du consommateur électrique (GK).